# EUROPEAN PATENT APPLICATION

(11) **EP 3 026 413 A1**
(43) Date of publication of application: **01.06.2016**
(21) Application number: 14195244.0
(22) Date of filing: 27.11.2014
(51) Int. Cl.: G01L 9/00

(54) **Determining an internal pressure in a pressurized hose**

(71) Applicant: Siemens Aktiengesellschaft, 80333 München (DE)
(72) Inventor: Starkey, Andrew, Dalton-in-Furness, LA15 8EH (GB); Rogers, John, Ulverston, Cumbria LA12 9ND (GB)

(57) **Abstract**

The present invention relates to a method for determining an internal pressure in a pressurized hose (11). According to the method, at least a part of the pressurized hose (11) is arranged between a first rigid surface (16) and a second rigid surface (17) which are arranged spaced apart such that the first rigid surface (16) and the second rigid surface (17) contact the pressurized hose (11). The pressurized hose (11) is compressed by reducing a distance between the first and second rigid surfaces (16, 17) by a predetermined distance such that a cross section of the pressurized hose (11) is deformed. A reactive force created by the compressed pressurized hose (11) is detected and the internal pressure in the pressurized hose (11) is determined based on the detected reactive force.

## Description

The present invention relates to a method for determining an internal pressure in a pressurized hose and to a pressure testing device for determining an internal pressure in a pressurized hose. The present invention relates especially to a non-intrusive method and testing device for determining an internal pressure in a pressurized hose without opening the pressurized hose.

Within the oil and gas industry, there is a requirement to protect electrical connections and conduits from water ingress and external pressure, especially in subsea equipment. A common solution to this requirement is the use of pressurized oil filled hoses which both act to mechanically protect the wires and provide a pressure compensating system when deployed subsea ensuring no stress on the components.

In order to sustain this water barrier and structural integrity, it is important that the hoses maintain a positive internal pressure in deep sea environment, for example up to 4,000 m water depth. As frequently requested by the specification set by the customer, the hose assemblies are tested with internal gauge pressures taken before and after the test. The gauge pressure must be above a certain value for it to be accepted. The gauge pressure reading is usually taken by the removal of a fill or vent screw of the hose assembly. However, technically, this avoids the factory acceptance test as the hose assembly has physically changed during the test's procedure. However, this is currently accepted as inevitable by the customer. Aside from the problem with the specification, removal of the fill or vent screw also introduces a risk of damaging a rubber sealing which may be located close to a threat of the fill or vent screw. While under pressure, the risk of damaging this seal while replacing the screw is considerably high.

Therefore, there is a need for determining the internal pressure within a flexible pressurized hose without removal of this vent or fill screw, or any other kind of intrusion into the closed hose assembly.

According to the present invention, this object is achieved by a method for determining an internal pressure in a pressurized hose as defined in claim 1 and a pressure testing device for determining an internal pressure in a pressurized hose as defined in claim 8. The dependent claims define preferred and advantageous embodiments of the present invention.

According to the present invention, a method for determining an internal pressure in a pressurized hose is provided. The pressurized hose comprises a closed interior which is filled with a pressurized fluid, for example oil. The pressurized hose has a predefined cross section and a plane of the cross section is extending perpendicular to a longitudinal direction of the pressurized hose. The hose may be used in subsea environment to protect wires arranged inside the hose and to provide a pressure compensating system which ensures no stress on the components inside the hose when deployed subsea. According to the method, at least a part of the pressurized hose is arranged between a first rigid surface and a second rigid surface. The pressurized hose is arranged such between the first and second rigid surfaces that the longitudinal direction of the pressurized hose is arranged in parallel to at least one of the first and second rigid surfaces. The first rigid surface and the second rigid surface are arranged spaced apart from each other, such that the first rigid surface and the second rigid surface contact the pressurized hose, for example at opposite positions along a circumference of the pressurized hose. Next, the pressurized hose is compressed between the first and second rigid surfaces. To accomplish this, a distance between the first and second rigid surfaces is reduced by a predetermined distance and as a result the cross section of the pressurized hose is deformed. For example, when the uncompressed cross section of the pressurized hose is substantially circular, the cross section of the pressurized hose may be deformed into an elliptical shape due to the pressure exerted by the first and second rigid surfaces on the pressurized hose. A reactive force created by the compressed pressurized hose is detected. The reactive force is created when the hose is compressed into an altered geometry which is analogous to an elliptical pressure vessel. Furthermore, the reactive force results from the internal pressure of the pressurized fluid inside the pressurized hose. Based on the detected reactive force, the internal pressure in the pressurized hose is determined. For example, the relationship between the reactive force and the internal pressure may be predetermined by practical and analytical means and may be used for determining the internal pressure based on the detected reactive force. In other words, the above described method utilizes a force measurement of the force output from the hose when it is compressed by a certain distance. The act of compressing the hose construction changes its geometry to that of an ellipse. This elliptical geometry produces a bending moment from its center and this will be the quantity measured. A varying internal pressure will change this value, the magnitude of which can be used to determine the pressure. The rate at which the force output changes may be found experimentally and theoretically, such that the force output can be substituted through an adequate algebraic equation in order to determine the internal pressure of the hose based on the detected reactive force. As the internal pressure in the pressurized hose is determined at an outside of the pressurized hose, there is no need to remove a fill or vent screw or a requirement to intrude into the hose assembly.

According to an embodiment, the first rigid surface and the second rigid surface are arranged spaced apart in parallel. The distance between the first and the second rigid surfaces is reduced by the predetermined distance in a direction perpendicular to the first and second rigid surfaces. By arranging the first and second rigid surfaces in parallel, an appropriate and secure arrangement of the pressurized hose between the first and the second rigid surfaces can be facilitated. When the distance between the first and the second rigid surfaces is reduced in a direction perpendicular to the parallel planes of the first and second rigid surfaces, a compression of the pressurized hose by the predetermined distance can be ensured.

According to a further embodiment, the reactive force created by the compressed pressurized hose is detected by detecting a force which is applied from the compressed pressurized hose to at least one of the first and second rigid surfaces. For example, a load cell may be installed in at least one of the first and second rigid surfaces for detecting the force which is applied from the compressed pressurized hose to the corresponding rigid surface. Corresponding load cells may be commercially available and may be easily integrated into the first and/or second rigid surface.

According to an embodiment, the hose is made of an elastic material and the predetermined distance for compressing the pressurized hose is selected such that a deformation of the hose is within an elastic deformation range of the elastic material of the hose. In other words, during compression of the pressurized hose, the material of the hose is not plastically deformed and the determination of the internal pressure may be performed reproducible without negatively affecting the hose. Furthermore, as the reactive force created by the compressed pressurized hose is influenced by two variables, the elasticity modules and the internal pressure in the pressurized hose, the internal pressure may be determined analytically based on the detected reactive force.

According to another embodiment, the hose is compressed by applying a force at two opposing outer surface locations of the hose. Preferably, as described above in connection with the parallel arrangement of the first and second rigid surfaces, the hose may be compressed at two opposing locations of a circumferential outer surface of the hose, such that, for example, a circular shape of an uncompressed hose is deformed by compression into an elliptical shape. In this case, the reactive force created by the elastic material of the hose due to the compression may be reproducibly determined. The determined reactive force created by the compressed pressurized hose then represents the reactive force created by the elastic material plus the reactive force created by the internal pressure of the pressurized fluid within the hose. As the reactive force created by the internal pressure has essentially a linear relationship with the internal pressure, a linear equation may be utilized to determine the internal pressure based on the detected reactive force.

According to an embodiment, the method comprises furthermore a step of determining the hose type of the pressurized hose from a predefined set of hose types. The predefined set of hose types may comprise, for example, hoses of different diameters or hoses made of different materials. The internal pressure in the pressurized hose is determined based on the detective reactive force and the hose type of the pressurized hose. For example, to each type of the predefined set of host types a corresponding linear equation is assigned. For determining the internal pressure in the pressurized hose of a certain type, the corresponding linear equation is selected based on the hose type and the internal pressure in the pressurized hose is calculated based on the detected reactive force and the selected linear equation. As a result, an internal pressure may be determined for a plurality of different types of pressurized hoses by simply exchanging a linear equation.

According to the present invention, a pressure testing device for determining an internal pressure in a pressurized hose is provided. The pressurized hose comprises a closed interior which is filled with a pressurized fluid and the pressurized hose has a predefined cross section. A plane of the cross section extends perpendicular to a longitudinal direction of the pressurized hose. The pressure testing device comprises a base member, a compression member and a support structure. The support structure couples the base member and the compression member such that a distance between the base member an the compression member is adjustable via the support structure. The distance between the base member and the compression member is adjustable and configured such that a compression force can be created on the pressurized hose when at least a part of the pressurized hose is arranged between the base member and the compression member. The longitudinal direction of the pressurized hose is arranged in parallel to the base member and/or the compression member and the pressurized hose is in contact with the base member and the compression member. By reducing the distance between the base member and the compression member by a predetermined distance, a compression force can be created on the pressurized hose and the cross section of the pressurized hose is deformed. For example, the base member may be a steel plate or a concrete floor on which the support structure is mounted and the support structure supports the compression member which is made, for example, of another steel plate. The pressure testing device comprises furthermore a load cell configured to detect a reactive force created by the pressurized hose which is compressed between the base member and the compression member. Finally, the pressure testing device comprises a processing unit which is coupled to the load cell and configured to determine the internal pressure in the pressurized hose based on the detected reactive force. Therefore, a pressure inside the pressurized hose may be determined at an outside of the pressurized hose and, consequently, opening of a fill or vent screw of the pressurized hose or introducing measurement equipment into the pressurized hose may be avoided.

According to an embodiment, the base member provides a first rigid surface and the compression member provides a second rigid surface. The first rigid surface and the second rigid surface are arranged in parallel and the support structure is configured to adjust a distance between the first rigid surface and the second rigid surface such that the compressing force can be created on the pressurized hose which is arranged between the first rigid surface and the second rigid surface. In this context, a rigid surface is a surface which is essentially not deformed when a high pressure is applied to the surface. For example, when a pressure of several hundred bars is supplied via the first rigid surface and the second rigid surface to the pressurized hose, the rigid surface will be deformed, for example dented in a contact area to the pressurized hose, for less than for example ten micrometers, preferably less than one micrometer. At the same time, the pressurized hose may be deformed or compressed by a few millimeters, for example by 1 to 5 mm when the pressurized hose has a diameter in an uncompressed state of, for example, 25 to 35 mm.

According to another embodiment, the load cell is arranged at the compression member. Additionally or as an alternative, the load cell may be arranged at the base member. By arranging the load cell at the compression member or at the base member, the reactive force created by the compressed pressurized hose can be reliably detected as the compression member and/or the base member are in direct contact to the pressurized hose with no mechanical components in between which may influence the reactive force.

According to another embodiment, the support structure comprises a plurality of threaded bars arranged at the base member. For example, the support structure may comprise two or four threaded bars fixed at the base member and supporting the compression member. The distance between the base member and the compression member may be adjusted by nuts which are arranged at the threaded bars and which are engaged with the compression member. By screwing the nuts along the threaded bars, a high pressure for compressing the pressurized hose can be generated and the distance between the base member and the compression member can be precisely adjusted, especially the distance between the base member and the compression member can be precisely reduced by the predetermined distance such that the cross section of the pressurized hose is deformed as predefined. Preferably, the threaded bars are arranged perpendicular to the first rigid surface of the base member such that the compression member can be easily adjusted in parallel with respect to the base member by turning the nuts synchronously.

According to another embodiment, the supports structure comprises a stop element configured to limit an adjustment range of the distance between the base member and the compression member. For example, the stop element may be a corresponding nut on each threaded bar limiting the movement of the compression member. The stop element ensures that the distance between the base member and the compression member is reduced by exactly the predetermined distance and not beyond such that a predetermined compression is exerted on the pressurized hose.

Finally, the pressure testing device may be configured to perform the methods described above and comprises therefore the advantages described above in connection with the method and the embodiments thereof.

Although specific features described in the above summary and in the following detailed description are described in connection with specific embodiments and aspects of the present invention, it should be understood that the features of the exemplary embodiments and aspects may be combined with each other unless specifically noted otherwise.

### Brief description of the drawings

The present invention will now be described in more detail with reference to the accompanying drawings.
Fig. 1 schematically shows a testing device in a front view and a side view according to an embodiment of the present invention.
Fig. 2 shows method steps of a method for determining an internal pressure in a pressurized hose according to an embodiment of the present invention.
Fig. 3 schematically shows a testing device in a perspective view according to an embodiment of the present invention.
Fig. 4 schematically shows a testing device in a perspective view according to another embodiment of the present invention.
Fig. 5 schematically shows a testing device in a top view, a front view, a side view and a perspective view according to a further embodiment of the present invention.

### Detailed description of the drawings

In the following, exemplary embodiments of the invention will be described in more detail.

It is to be understood that the features of the various exemplary embodiments described herein may be combined with each other unless specifically noted otherwise. Same reference signs in the various drawings refer to similar or identical components.

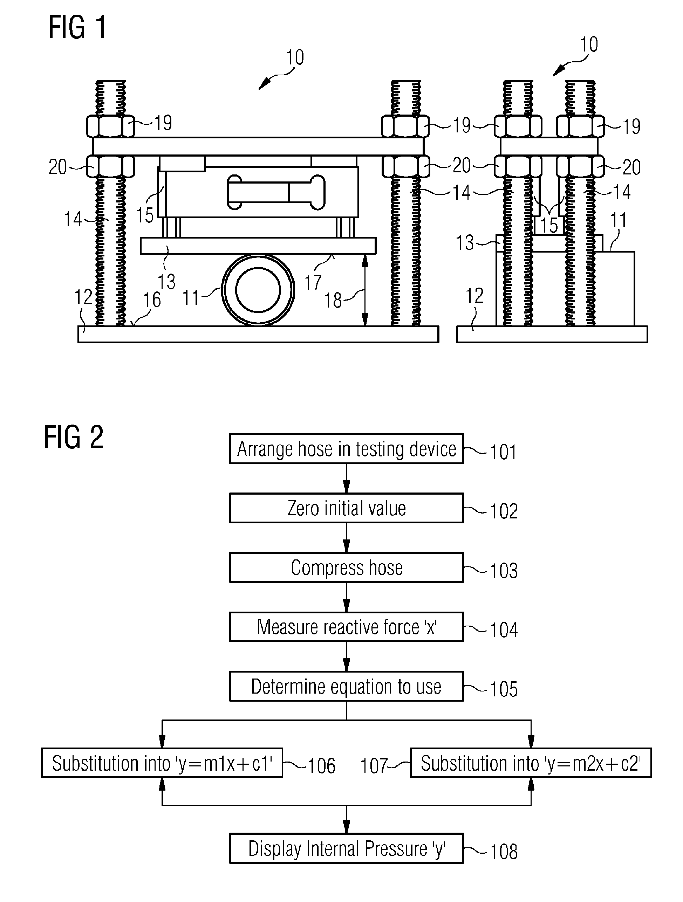

Fig. 1 schematically shows a pressure testing device 10 for determining an internal pressure in a pressurized hose 11. In the schematic drawings of Fig. 1, the pressure testing device 10 is shown on the left-hand side in a front view and on the right-hand side in a side view. The hose 11 may comprise a hose which is used in the oil and gas industry to protect electrical connections and conduits from water ingress and external pressure. The hose 11 may be pressurized with an oil filled into the hose for mechanically protecting wires inside the hose and for providing a pressure-compensating system when deployed subsea ensuring no stress on the components inside the hose. Therefore, the interior of the hose may be separated from an exterior of the hose such that the pressurized fluid inside the hose, for example a pressurized oil, is enclosed in the interior of the hose. The hose may have a predefined cross section, for example a circular cross section, and a plane of the cross section extends perpendicular to a longitudinal direction of the pressurized hose. The diameter of the cross section may be in the range of 10 to 70 mm, preferably in the range of 25-32 mm.

The pressure testing device 10 comprises a base member 12, a compression member 13, a support structure 14 and a load cell 15. A test method for determining the internal pressure inside the pressurized hose 11 as will be described below, utilizes the load cell 15 to determine the force output from the hose 11 when it is compressed by a certain distance. The act of compressing the hose 11 changes its geometry into that of an ellipse. This elliptical geometry produces a bending moment from its center and this will be the quantity measured by the load cell. A varying internal pressure inside the hose 11 will change this value, the magnitude of which will be used to determine the pressure inside. The nature of the design requires the base and compression members 12 and 13 to be essentially rigid for the calculations and for drawing conclusions from theoretical information. This assumption can be considered relatively accurate due to the comparative difference in material strength between the hose construction and the base and compression members 12 and 13. The compression of the hose 11 is intended to be conducted between for example a steel plate as the compression member 13 and a concrete or steel flooring as the base member 12. A surface 16 of the base member 12 and a surface 17 of the compression member 13 may be contacting the hose 11 and may be sufficiently rigid to be essentially not deformed when the hose 11 is compressed.

As an example, the support structure 14 may comprise threaded bars to adjust the value of compression of the hose 11. By screwing and moving nuts 19 along the threaded bars, the load cell 15 may be moved along with the compression member 13 for compressing the hose by a predetermined amount. The hose 11 may be compressed for example by a distance of a few millimeters, for example 1 to 2 mm. In other words, a distance 18 between the parallel arranged surfaces 16 and 17 of the base member 12 and the compression member 13 is varied. The support structure 14 may be adjustable in order to allow different hose assemblies to be tested with the same testing device 10. The support structure 14 like the compression member 13 and the base member 12 previously described must be rigid to ensure that the geometry is constant removing possible variables in the system. The force used to compress the hose is independent of the force applied through the adjustable support structure 14. This means that the hose 11 is compressed by a certain distance. Once this distance of compression is achieved, any excess force will be transmitted directly through the threaded bars of the support structure 14 by adjustable stop nuts 20. Thus the load cell 15 cannot detect it. This ensures that the reading is a true representation of the force required to alter the geometry. The pressure testing device 10 comprises furthermore a (not shown) processing unit coupled to the load cell 15 and configured to determine the internal pressure in the pressurized hose 11 based on the reactive force detected by the load cell 15. The processing unit may comprise a display for outputting the determined internal pressure to a user. The method by which the force output is calculated as internal pressure is through substitution into an algebraic equation, for example a linear algebraic equation. This algebraic equation may be taken partly from theoretical calculations but predominately from experimental data. This takes into account real world variables and ensures that these can be contented with while in field. For example, the pressure testing device 10 may utilize an existing electronic circuit taken from a set of digital scales. This circuit is intended to convert the change in resistance created by a strain gage into an internal pressure reading with no external interference.

The analysis of different styles of hose constructions, for example hoses made of different materials or having different diameters, requires that the force value be substituted through a different algebraic equation. Several different algebraic equations may be preprogrammed into the processing unit and it may be possible to switch between these equations without the use of any external computational sources. For example, this change may be operated by means of simple two-or multi-position electrical switch.

A method for determining an internal pressure in a pressurized hose 11 with the testing device 10 will be described in more detail with reference to Fig. 2.

Fig. 2 shows method steps 101-108 which may be performed by the processing unit of the testing device 10. In step 101 at least a part of the pressurized hose 11 is arranged in the testing device 10. In detail, the pressurized hose 11 is arranged between the rigid surface 16 of the base member 12 and the rigid surface 17 of the compression member 13. The rigid surfaces 16 and 17 are arranged spaced apart such that the rigid surfaces 16, 17 contact the pressurized hose 11 at opposing positions of a cross section of the hose 11. The longitudinal direction of the pressurized hose 11 is arranged in parallel to the rigid surfaces 16, 17. In this state, the rigid surfaces 16, 17 are not pretensioned by the support structure 14 such that the hose 11 is not deformed, but contacted by the rigid surfaces 16, 17. In step 102, the load cell 15 is calibrated by resetting it to a zero initial value. In step 103, the hose 11 is compressed by a predefined distance of for example 1 or 2 mm. For compressing the hose 11, the nuts 19 may be moved along the threaded rods 14 such that the compression member is moved along with the load cell 15 closer to the base member 12. In step 104, a reactive force 'x' is measured by the processing unit and the load cell 15. In step 105, the above-mentioned switch for selecting the type of hose to be tested is evaluated and a corresponding equation for use is determined. Depending on the selected equation, the reactive force 'x' is selectively used in the determined equation in either step 106 or step 107. The internal pressure 'y' determined in either step 106 or step 107 is displayed in step 108 to a user.

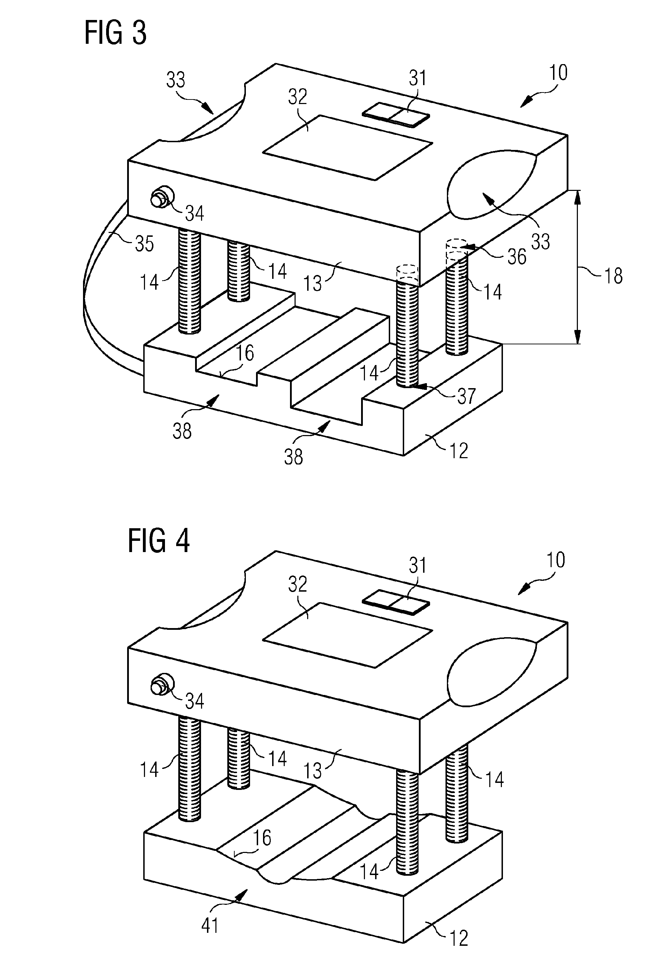

Fig. 3 shows another example of a pressure testing device 10 in a perspective view. The pressure testing device 10 comprises a base member 12, a compression member 13 and a support structure 14 coupling the base member 12 and the compression member 13. In the rigid surface 16 of the base member 12, two different profiles 38 are provided to suit different types of pressurized hoses 11. Furthermore, the compression member 13 is integrated in a housing which may accommodate a processing unit, for example a microprocessor circuit, a display 32, a select switch 31, a zero function button 34 and hand scallops 33 for handling the compression member 13. The zero function button 34 may be used for initializing the pressure-testing device 10 as described in Fig. 2 in connection with step 102. The select switch 31 may be used to determine which equation to use as described in connection with steps 105-107 in Fig. 2. The display 32 may comprise for example a liquid crystal display for displaying the determined internal pressure of the pressurized hose 11 to a user. The housing of the compression member 13 may aid in the mechanical and electrical protection of internal components like the processing unit, the select switch 31, the display 32 and the load cell 15. It may also be used to provide a platform for efficient loading of the device 10. A lanyard or chain 35 may be further provided to ensure that the compression member 13 and the base member 12 stay together. The support structure 14 may comprise for example four rods, which may be threaded rods, and which are fixed to the base member 12 at fixed fits 37 and which may have selectively an interfere or lose fit 36 to the compression member 13.

Fig. 4 shows a further example of a pressure testing device 10 which has a similar structure as the pressure testing device of Fig. 3. The main difference between the pressure testing devices 10 of Figs. 3 and 4 is the structure of the base member 12 for receiving the hose 11. In the rigid surface 16 of the base member 12 of the pressure testing device 10 of Fig. 4 a profile 41 is provided, which is suited to receive two different hose profiles. Therefore, the profile 41 has two different radii of curvature.

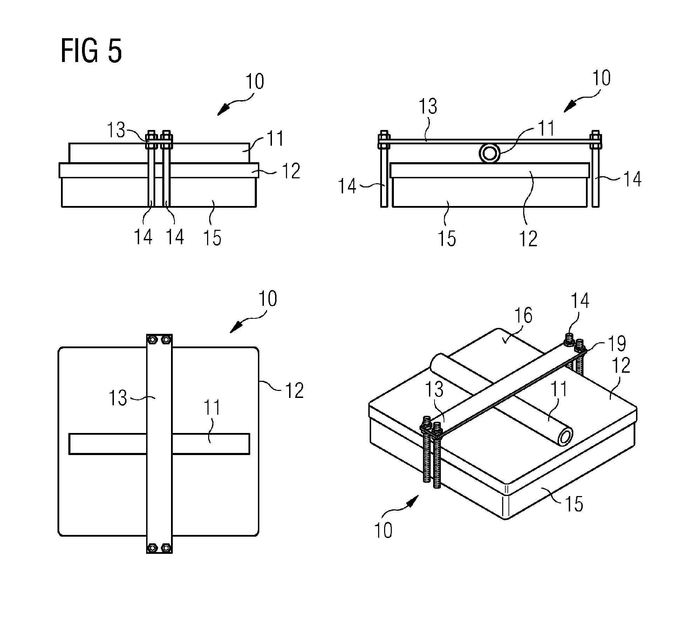

Fig. 5 shows another example of a pressure testing device 10 in different views. In the pressure testing device 10 of Fig. 5, the load cell 15 is arranged at the base member 12. The other components shown in Fig. 5 correspond to the components of the pressure testing devices 10 shown in Figs. 1, 3 and 4.

In the above-shown examples, only one load cell 15 is shown. However, other examples of pressure testing devices may comprise more than one load cell, for example two or four load cells.

In the following, further details of the non-intrusive hose pressure testing devices 10 of Figs. 1 and 2-5 are provided. However, the following details are only examples and may be altered as required. For example, the reading force input from the attached load cells 15 may have an equivalent accuracy of 10 g or greater. As described above, the force detected by the load cell 15 may be substituted in linear algebraic equations. However, other functions than linear algebraic equations may be used. The switch 31 may be configured for switching between two linear equations without the use of external computation methods to accommodate two hoses. This may be expanded to three or more switching positions and three or more linear equations. The results for the mentioned equations may be displayed visually on an integrated display 32 with an accuracy of one to two decimal points. The size of the display may be such that it allows easy reading from 0.5 to 1 m. An indicator of a steady reading may be displayed once a steady reading is found. Basic adjustment functions, such as the zeroing, may be conducted by a single operation, for example by pressing the zero function button 34. The entire pressure testing device may be powered by a localized direct current power supply, for example a battery, which may provide the device with power for a significant amount of time (in the order of years) and which may be easily replaceable. The processing unit may turn the pressure testing device 10 automatically off after a predetermined amount of time, for example after a minute of no use without a button/switch being pressed, to save power. The pressure testing device 10 may additionally comprise temperature sensors for providing an integrated temperature compensation. Furthermore, the pressure testing device 10 may comprise a housing to provide a reasonable water-resistance.

## Claims

1. A method for determining an internal pressure in a pressurized hose, the pressurized hose (11) comprising a closed interior filled with a pressurized fluid and having a predefined cross section, a plane of the cross section extending perpendicular to a longitudinal direction of the pressurized hose, the method comprising:
- arranging at least a part of the pressurized hose (11) between a first rigid surface (16) and a second rigid surface (17) which are arranged spaced apart such that the first rigid surface (16) and the second rigid surface (17) contact the pressurized hose (11), wherein the longitudinal direction of the pressurized hose (11) is arranged in parallel to the first rigid surface (16) and/or second rigid surface (17),
- compressing the pressurized hose (11) by reducing a distance (18) between the first and second rigid surfaces (16, 17) by a predetermined distance such that the cross section of the pressurized hose (11) is deformed,
- detecting a reactive force created by the compressed pressurized hose (11), and
- determining the internal pressure in the pressurized hose (11) based on the detected reactive force.

2. The method according to claim 1, wherein the first rigid surface (16) and second rigid surface (17) are arranged spaced apart in parallel, wherein the distance (18) between the first and second rigid surfaces (16, 17) is reduced by the predetermined distance in a direction perpendicular to the first and second rigid surfaces (16, 17).

3. The method according to claim 1 or 2, wherein the step of detecting the reactive force created by the compressed pressurized hose (11) comprises:
- detecting a force being applied from the compressed pressurized hose (11) to at least one of the first and second rigid surfaces (16, 17).

4. The method according to any one of the preceding claims, wherein the hose (11) is made of an elastic material, wherein the predetermined distance for compressing the pressurized hose (11) is selected such that a deformation of the hose (11) is within an elastic deformation range of the elastic material of the hose (11).

5. The method according to any one of the preceding claims, wherein compressing the hose (11) comprises applying a force at least two opposing outer surface locations of the hose (11).

6. The method according to any one of the preceding claims, the method further comprising:
- determining a hose type of the pressurized hose (11) from a predefined set of hose types,
wherein the step of determining the internal pressure in the pressurized hose (11) comprises:
- determining the internal pressure in the pressurized hose (11) based on the detected reactive force and the hose type of the pressurized hose (11).

7. The method according to claim 6, wherein the method further comprises:
- providing a plurality of linear equations, each linear equation being assigned to a hose type of the predefined set of hose types,
wherein the step of determining the internal pressure in the pressurized hose comprises:
- selecting a linear equation from the plurality of linear equations based on the determined hose type of the pressurized hose (11), and
- calculating the internal pressure in the pressurized hose (11) based on the detected reactive force and the selected linear equation.

8. A pressure testing device for determining an internal pressure in a pressurized hose, the pressurized hose (11) comprising a closed interior filled with a pressurized fluid and having a predefined cross section, a plane of the cross section extending perpendicular to a longitudinal direction of the pressurized hose, the pressure testing device (10) comprising:
- a base member (12),
- a compression member (13),
- a support structure (14) coupling the base member (12) and the compression member (13), wherein the support structure (14) is configured to adjust a distance (18) between the base member (12) and the compression member (13) such that a compressing force can be created on the pressurized hose (11) by arranging at least a part of the pressurized hose (11) between the base member (12) and the compression member (13) such that the longitudinal direction of the pressurized hose (11) is arranged in parallel to the base member (12) and/or the compression member (13) and the pressurized hose (11) is contacted by the base member (12) and the compression member (13), and by reducing the distance (18) between the base member (12) and the compression member (13) by a predetermined distance such that the cross section of the pressurized hose (11) is deformed,
- a load cell (15) configured to detect a reactive force created by the pressurized hose (11) compressed between the base member (12) and the compression member (13), and
- a processing unit configured to determine the internal pressure in the pressurized hose (11) based on the detected reactive force.

9. The pressure testing device according to claim 8,
wherein the base member (12) provides a first rigid surface (16) and the compression member (13) provides a second rigid surface (17), wherein the first rigid surface (16) and the second rigid surface (17) are arranged in parallel and the support structure (14) is configured to adjust a distance (18) between the first rigid surface (16) and the second rigid surface (17) such that the compressing force can be created on the pressurized hose (11) arranged between the first rigid surface (16) and the second rigid surface (17).

10. The pressure testing device according to claim 8 or 9, wherein the load cell (15) is arranged at the compression member (13).

11. The pressure testing device according to any one of claims 8-10, wherein the load cell (15) is arranged at the base member (12).

12. The pressure testing device according to any one of claims 8-11, wherein the support structure (14) comprises a plurality of threaded bars arranged at the base member (12), wherein the distance (18) between the base member (12) and the compression member (13) is adjusted by nuts (19), the nuts (19) being arranged at the threaded bars and being engaged with the compression member (13).

13. The pressure testing device according to claim 9 and 12, wherein the threaded bars are arranged perpendicular to the first rigid surface (16) of the base member (12).

14. The pressure testing device according to any one of claims 8-13, wherein the support structure (14) comprises a stop element (20) configured to limit an adjustment range of the distance (18) between the base member (12) and the compression member (13).

15. The pressure testing device according to any one of claims 8-14, wherein the pressure testing device (10) is configured to perform the methods steps defined in any one of claims 1-7.
